# EUROPEAN PATENT APPLICATION

(11) **EP 4 671 906 A1**
(43) Date of publication of application: **31.12.2025**
(21) Application number: 24759715.6
(22) Date of filing: 21.02.2024
(51) Int. Cl.: G05D 1/69

(54) **METHOD AND APPARATUS FOR TRAJECTORY ADJUSTMENT OF AUTONOMOUS MOBILE DEVICE**

(30) Priority: 23.02.2023 CN 202310190038
(71) Applicant: Beijing Geekplus Technology Co., Ltd., Chaoyang District Beijing 100102 (CN)
(72) Inventor: XIAO, Zhaofeng, Beijing 100102 (CN); LIU, Zhenyue, Beijing 100102 (CN); FANG, Fei, Beijing 100102 (CN); LV, Lv, Beijing 100102 (CN); LI, Zewei, Beijing 100102 (CN)
(74) Representative: De Sandre, Emanuele
(86) International application number: PCT/CN2024/077953
(87) International publication number: WO 2024/175038

(57) **Abstract**

A method and apparatus for trajectory adjustment of an autonomous mobile device. The method is applicable to the autonomous mobile device in which at least one first UWB module is arranged, the first UWB module comprising a Bluetooth unit and a UWB chip. The method comprises: on the basis of the Bluetooth unit of the first UWB module, receiving first ranging trigger information sent by a target obstacle object (202), wherein the target obstacle object is provided with at least one second UWB module; on the basis of the first ranging trigger information and by means of the UWB chip of the first UWB module, sending a first ranging request to the target obstacle object (204); acquiring first ranging information returned by the target obstacle object on the basis of the first ranging request (206); according to the first ranging information, determining current position information of the target obstacle object (208); and on the basis of the current position information, adjusting a movement trajectory of the autonomous mobile device (210).

## Description

### CROSS-REFERENCE TO RELATED APPLICATION

This application is based upon and claims priority to Chinese Patent Application No. 202310190038.9 filed on February 23, 2023, the entire contents of which are incorporated herein by reference.

### FIELD

The present invention relates to the field of device control technology, and more particularly, to a method for trajectory adjustment of an autonomous mobile device. The present invention also relates to an apparatus for trajectory adjustment of an autonomous mobile device, a system for trajectory adjustment of an autonomous mobile device, a computing device, and a computer-readable storage medium.

### BACKGROUND

With the continuous development of science and technology, the research and development of mobile robots are also constantly improving. When the mobile robot operates in a human-machine coexist scenario, due to sensor blind spots or obstructions, there may occur a situation where people suddenly enters a travel path of the mobile robot, and the mobile robot may not be able to respond in time, which may cause personal injury in an extreme case.

### SUMMARY

Embodiments of the present invention provide a method for trajectory adjustment of an autonomous mobile device. The present invention also relates to an apparatus for trajectory adjustment of an autonomous mobile device, a system for trajectory adjustment of an autonomous mobile device, a computing device, and a computer-readable storage medium.

According to some embodiments of the present invention, a method for trajectory adjustment of an autonomous mobile device is provided, which is applicable to the autonomous mobile device. The autonomous mobile device is provided with at least one first UWB module, and the first UWB module includes a Bluetooth unit and a UWB chip. The method includes: receiving, by the Bluetooth unit of the first UWB module, first ranging trigger information sent by a target object, where the target object is provided with at least one second UWB module; sending, by the UWB chip of the first UWB module, first ranging request to the target object based on the first ranging trigger information; acquiring first ranging information returned by the target object based on the first ranging request; determining current position information of the target object according to the first ranging information; and adjusting a moving trajectory of the autonomous mobile device based on the current position information of the target object.

According to some embodiments of the present invention, a method for trajectory adjustment of an autonomous mobile device is provided, which is applied to a target object. The target object is provided with at least one second UWB module, and the second UWB module includes a Bluetooth unit and a UWB chip. The method includes: broadcasting first ranging trigger information by the Bluetooth unit of the second UWB module; determining first ranging information based on a first ranging request in a case of receiving the first ranging request returned by an autonomous mobile device based on the first ranging trigger information, where the autonomous mobile device is provided with at least one first UWB module; and sending the first ranging information to the autonomous mobile device to make the autonomous mobile device adjust a moving trajectory of the autonomous mobile device based on the first ranging information.

According to some embodiments of the present invention, a method for trajectory adjustment of an autonomous mobile device is provided, which is applied to a UWB base station. The UWB base station is provided with at least one fifth UWB module, and the at least one fifth UWB module includes a Bluetooth unit and a UWB chip. The method includes: receiving a device ranging request sent by an autonomous mobile device and an object ranging request sent by a target object; determining device position information of the autonomous mobile device based on the device ranging request and determining object position information of the target object based on the object ranging request; and calculating a distance between the autonomous mobile device and the target object according to the device position information and the object position information, and generating adjustment information for adjusting a moving trajectory of the autonomous mobile device based on the distance.

According to some embodiments of the present invention, a system for trajectory adjustment of an autonomous mobile device is provided, the system includes an autonomous mobile device and a target object, the autonomous mobile device is provided with at least one first UWB module, the target object is provided with at least one second UWB module, the at least one first UWB module is in a monitor mode and is configured to send a first ranging request based on received first ranging trigger information in the monitor mode, and the at least one second UWB module is in an announcer mode and is configured to broadcast the first ranging trigger information in the announcer mode, and the at least one first UWB module and the at least one second UWB module each include a Bluetooth unit and a UWB chip. The target object is configured to output the first ranging trigger information by the Bluetooth unit of the second UWB module, and the autonomous mobile device is configured to receive, by the Bluetooth unit of the first UWB module, the first ranging trigger information sent by the target object, and send, by the UWB chip of the first UWB module, the first ranging request to the target object based on the first ranging trigger information. The target object is further configured to send first ranging information to the autonomous mobile device based on the first ranging request; and the autonomous mobile device is further configured to determine current position information of the target object according to the first ranging information, and adjust a moving trajectory of the autonomous mobile device based on the current position information.

According to some embodiments of the present invention, an apparatus for trajectory adjustment of an autonomous mobile device is provided, the apparatus includes: a receiving module, configured to receive, by the Bluetooth unit of the first UWB module, first ranging trigger information sent by a target object; a sending module, configured to send, by the UWB chip of the first UWB module, first ranging request to the target object based on the first ranging trigger information; an acquiring module, configured to acquire first ranging information returned by the target object based on the first ranging request; a determining module, configured to determine current position information of the target object according to the first ranging information; and an adjusting module, configured to adjust a moving trajectory of the autonomous mobile device based on the current position information of the target object. The target object is provided with at least one second UWB module.

According to some embodiments of the present invention, an apparatus for trajectory adjustment of an autonomous mobile device is provided, the apparatus includes: an announcer module, configured to broadcast first ranging trigger information by a Bluetooth unit of a second UWB module; a determining module, configured to determine first ranging information based on a first ranging request, in a case of receiving the first ranging request returned by the autonomous mobile device based on the first ranging trigger information; and a sending module, configured to send the first ranging information to the autonomous mobile device, to make the autonomous mobile device adjust a moving trajectory of the autonomous mobile device based on the first ranging information. The autonomous mobile device is provided with at least one first UWB module.

According to some embodiments of the present invention, a computing device is provided, which includes a memory, a processor, and computer instructions stored in the memory and executable by the processor, and the processor is configured to implement the steps of the method for trajectory adjustment of an autonomous mobile device when executing the computer instructions.

According to some embodiments of the present invention, a computer-readable storage medium is provided, which has stored therein computer instructions that, when executed by a processor, cause the steps of the method for trajectory adjustment of an autonomous mobile device to be implemented.

With the method for trajectory adjustment of an autonomous mobile device provided in the present invention, the autonomous mobile device receives the first ranging trigger information sent by the target object, generates the first ranging request based on the first ranging trigger information to establish a communication connection between the target object and the autonomous mobile device; receives the first ranging information returned by the target object based on the first ranging request to calculate the distance between the target object and the autonomous mobile device; determines current position information of the target object based on the first ranging information, and determines the moving trajectory of the autonomous mobile device based on the current position information, thereby avoiding the occurrence of a collision.

### BRIEF DESCRIPTION OF THE DRAWINGS

FIG. 1 is a schematic diagram showing a scenario to which a method for trajectory adjustment of an autonomous mobile device is applicable according to some embodiments of the present invention;
FIG. 2A is a flow chart of a method for trajectory adjustment of an autonomous mobile device applicable to an autonomous mobile device according to some embodiments of the present invention;
FIG. 2B is a schematic diagram showing calculation of current distance information according to some embodiments of the present invention;
FIG. 2C is a schematic diagram showing application of a distance threshold according to some embodiments of the present invention;
FIG. 2D is a schematic diagram showing determination of whether speed adjustment of an AMR is required according to some embodiments of the present invention;
FIG. 3A is a flow chart of a method for trajectory adjustment of an autonomous mobile device applied to a target object according to some embodiments of the present invention;
FIG. 3B is a schematic diagram of a process involving a plurality of target objects and a plurality of autonomous mobile devices according to some embodiments of the present invention;
FIG. 4A is a schematic block diagram of a system for trajectory adjustment of an autonomous mobile device according to some embodiments of the present invention;
FIG. 4B is a schematic diagram showing a process when there exists a faulty autonomous mobile device according to some embodiments of the present invention;
FIG. 4C is a schematic diagram showing a scenario including a detection UWB module according to some embodiments of the present invention;
FIG. 4D is a schematic diagram showing another scenario including a detection UWB module according to some embodiments of the present invention;
FIG. 5 is a schematic structural diagram of an apparatus for trajectory adjustment of an autonomous mobile device applicable to an autonomous mobile device according to some embodiments of the present invention;
FIG. 6 is a schematic structural diagram of an apparatus for trajectory adjustment of an autonomous mobile device applicable to a target object according to some embodiments of the present invention;
FIG. 7 is a flow chart of a method for trajectory adjustment applicable to a UWB base station according to some embodiments of the present invention; and
FIG. 8 is a structural block diagram of a computing device according to some embodiments of the present invention.

### DETAILED DESCRIPTION

Some details are described below to facilitate a full understanding of the present invention. However, embodiments of the present invention may be implemented in other ways than those described herein, and those skilled in the art may make similar extensions without departing from the concept of the present invention, so the present invention is not limited by the detailed implementations disclosed below.

Terms in one or more embodiments of the present invention are used for describing specific embodiments, and are not intended to limit one or more embodiments of the present invention. As used in one or more embodiments of the present invention and the appended claims, "a/an", "said" and "the" in singular forms are intended to include plural forms, unless clearly indicated in the context otherwise. It should also be understood that, the term "and/or" used in one or more embodiments of the present invention represents and contains any one or any possible combinations of one or more associated items listed.

It should be understood that, although terms such as "first", "second" or the like may be used in one or more embodiments of the present invention for describing various information, these information should not be limited by these terms. These terms are used for distinguishing information of the same type from each other. For example, "first" may also be referred to as "second", and similarly, "second" may also be referred to as the "first", without departing from the scope of one or more embodiments of the present invention. Depending on the context, the term "if" as used herein may be construed to mean "when" or "upon" or "in response to determining".

Firstly, terms involved in one or more embodiments of the present invention are explained.

Ultra Wide Band (UWB): a wireless carrier communication technology that does not use a sinusoidal carrier but instead uses non-sinusoidal narrow pulses to transmit data, so it occupies a wide spectrum range.

Autonomous mobile robot (AMR): it is used to handle vehicles and/or receptacles in an automated warehousing system to perform warehousing, picking, packaging and/or transportation of goods.

Angle-of-Arrival (AOA) ranging: a positioning algorithm based on the angle of arrival of a signal, which is a typical ranging-based positioning algorithm, in which a direction of arrival of a signal of a transmitting node is sensed by a certain hardware device, a relative direction or angle between a receiving node and an anchor node is calculated, and a triangulation or other methods are used to calculate a position of an unknown node.

Time of Flight Measurement (TOF) ranging and positioning: TOF ranging technology with UWB mainly uses a round-trip time of flight of signals between two asynchronous transceivers to measure a distance between nodes.

Two-way ranging (TWR) ranging and positioning: the TWR positioning algorithm with UWB uses a round-trip time of flight (TOF) between a tag and a base station to calculate a distance between the tag and the base station, and calculates a position of the tag through a trilateration positioning algorithm.

Time Difference of Arrival (TDOA) ranging and positioning: a positioning algorithm which measures a difference between a transmission time between a tag and a base station and a transmission time between the tag and another base station for positioning.
When an AMR operates in a human-machine coexist scenario, due to sensor blind spots or obstructions, there may occur a situation where people suddenly enters a travel path of the AMR, and the AMR may not be able to respond in time (such as emergency stop), which may cause personal injury in an extreme case. In addition, when an AMR malfunctions and cannot report to the system, since the system does not know a position of the AMR, and nearby AMRs cannot sense the position of the faulty AMR and cannot make a judgment, which will lead to congestion in the warehousing system.

In view of the above, the present invention provides embodiments in which a plurality of first UWB modules are set on a robot, a mobile object carries a second UWB module, and information interaction between the first UWB module on the robot and the second UWB module on the mobile object is performed to implement a ranging function. Since a plurality of UWB modules are able to detect each other over a long range, the AMR has enough time to stop or go around the obstacle to avoid collision with the mobile object or avoid congestion.

In the present invention, a method for trajectory adjustment of an autonomous mobile device is provided. The present invention also relates to an apparatus for trajectory adjustment of an autonomous mobile device, a computing device, and a computer-readable storage medium, which are described in detail in the following embodiments.

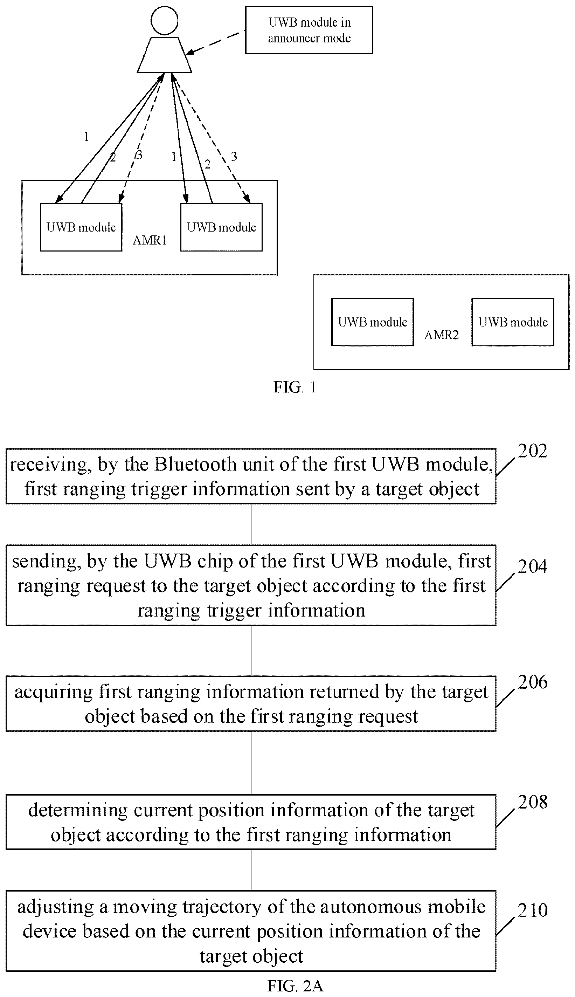

FIG. 1 is a schematic diagram showing a scenario to which a method for trajectory adjustment of an autonomous mobile device is applicable according to some embodiments of the present invention. As shown in FIG. 1, a warehousing system including AMR1, AMR2 and a mobile object (also referred to as a target object) is taken as an example.

As shown in FIG. 1, the mobile object is a staff who carries a UWB module in an announcer mode, the UWB module in the announcer mode will continuously broadcast Bluetooth information (line 1); AMR1 and AMR2 each are provided with UWB modules in a monitor mode at front and back positions; if the UWB module in the monitor mode receives the Bluetooth information broadcasted by the announcer and the handshake is successful, the UWB module in the monitor mode sends a first ranging request to the UWB module in the announcer mode (line 2); further, the UWB module in the announcer mode will actively send ranging information to the UWB module in the monitor mode (line 3), and the UWB module in the monitor mode will calculate a distance between the AMR and the staff based on the ranging information, and determine position information of the staff, based on which a movement of the robot may be adjusted to avoid collision. It should be noted that in the following embodiments, the UWB module in the monitor mode on the AMR is referred to as the first UWB module, and the UWB module in the announcer mode on the target object is referred to as the second UWB module.

According to the present invention, an autonomous mobile device receives first ranging trigger information sent by a target object, and generates a first ranging request based on the first ranging trigger information to establish a communication connection between the target object and the autonomous mobile device; receives first ranging information returned by the target object based on the first ranging request to calculate a distance between the target object and the autonomous mobile device; determines current position information of the target object based on the first ranging information, and determines a moving trajectory of the autonomous mobile device based on the current position information, so as to avoid collision.

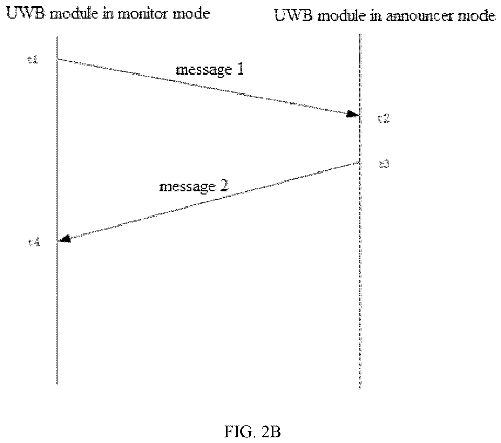

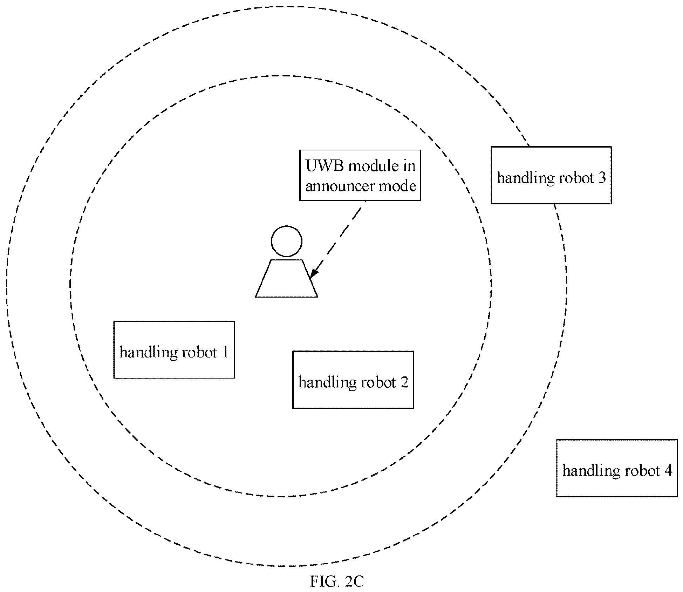

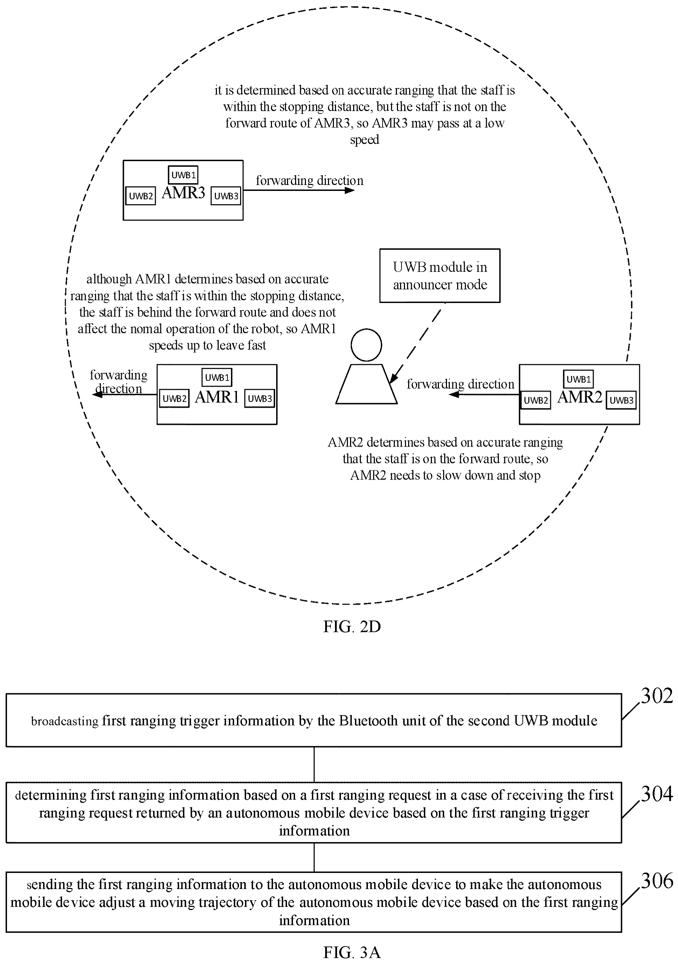

FIG. 2A is a flow chart of a method for trajectory adjustment of an autonomous mobile device according to some embodiments of the present invention, the method is applicable to an autonomous mobile device, the autonomous mobile device is provided with at least one first UWB module, and the first UWB module includes a Bluetooth unit and a UWB chip. As shown in FIG. 2, the method for trajectory adjustment of the autonomous mobile device includes the following steps.

Step 202, the Bluetooth unit of the first UWB module receives first ranging trigger information sent by a target object.

For example, the target object is provided with at least one second UWB module. That is, the autonomous mobile device and the target object in the present invention are both provided with UWB modules. The first UWB module and the second UWB module both include a Bluetooth unit and a UWB chip, the Bluetooth unit is able to implement information communication between the target object and the autonomous mobile device, and the UWB chip is used to calculate a distance between the target object and the autonomous mobile device, and further determine position information of the target object.

In some examples, the autonomous mobile device may be a handling robot, a cargo box robot, a sweeping robot, etc., which is not limited in the present invention.

The UWB module may work in the announcer mode or the monitor mode. In a case where the UWB module is in the announcer mode, the Bluetooth unit of the UWB module is able to broadcast the first ranging trigger information to surroundings of the UWB module (such as within a preset distance range), so as to establish a communication link between the UWB module and other UWB modules within the preset distance. In a case where the UWB module is in the monitor mode, it is able to receive the first ranging trigger information broadcasted by other UWB modules (such as the UWB module set on the target object), generate a first ranging request based on the received first ranging trigger information, and send the first ranging request to the target object with which the UWB module has established the communication link.

In some embodiments, the UWB module may only work in the monitor mode, or the UWB module may only work in the announcer mode, or the UWB module may work in the announcer mode for a period of time and in the monitor mode for another period of time, which is not limited in embodiments of the present invention. It should be noted that the working mode of the UWB module may be set by software so that the UWB module is able to switch between the announcer mode and the monitor mode.

The following takes the example that the first UWB module of the autonomous mobile device may work in the monitor mode, and may also work in the announcer mode to introduce the functions of the first UWB module when working in different working modes.

For example, in a case where the autonomous mobile device operates normally, the first UWB module of the autonomous mobile device may be set to the monitor mode. In the case where the first UWB module of the autonomous mobile device is in the monitor mode, the first ranging trigger information sent by the target object may be received through the Bluetooth unit in the first UWB module, to trigger the first UWB module to send the first ranging request. The first ranging trigger information refers to information for triggering an object to generate the first ranging request; the target object refers to an object whose distance from the autonomous mobile device is less than a preset distance, and the target object may be a movable robot, a staff or other movable object.

For example, when the autonomous mobile device malfunctions, the first UWB module of the autonomous mobile device may be switched to the announcer mode. In the case where the first UWB module is in the announcer mode, the Bluetooth unit of the first UWB module of the autonomous mobile device broadcasts ranging trigger information to the outside, so that other UWB modules receive the ranging trigger information and perform ranging to avoid collision with the faulty autonomous mobile device. That is, when the autonomous mobile device malfunctions, the autonomous mobile device may be used as the target object, and broadcasts the ranging trigger information.

In some examples, in a case where the target object is a staff, the staff may enter the warehousing system wearing work clothes (such as safety work clothes) provided with the second UWB module. The second UWB module of the work clothes is in the announcer mode and may broadcast the first ranging trigger information into the space. The first UWB module of the autonomous mobile device (such as a handling robot) is in the monitor mode. When the handling robot moves according to a preset moving trajectory, if a distance between the handling robot and the staff wearing the work clothes reaches a Bluetooth communicable distance, the first UWB module of the handling robot is able to receive the first ranging trigger information broadcasted by the second UWB module on the work clothes. By receiving the first ranging trigger information, a first ranging request to the target object is generated based on the first ranging trigger information.

Step 204, the UWB chip of the first UWB module sends a first ranging request to the target object based on the first ranging trigger information.

For example, after the Bluetooth unit of the first UWB module receives the first ranging trigger information, the UWB chip of the first UWB module is triggered to generate the first ranging request based on the first ranging trigger information.

The UWB chip is a dedicated integrated chip with the ability to send and receive UWB messages. The first ranging request refers to a request message with a timestamp sent by the UWB chip, and the processor in the Bluetooth unit performs data processing. In applications, the first ranging request includes time information of generating the first ranging request, which is used for calculation of the distance between the autonomous mobile device and the target object.

In some embodiments, the UWB chip in the first UWB module of the handling robot generates the first ranging request based on the first ranging trigger information; and sends the first ranging request to the second UWB module of the work clothes. The UWB chip of the first UWB module sends the first ranging request to the target object based on the first ranging trigger information, so that a ranging task between the autonomous mobile device and the target object will be subsequently triggered based on the first ranging request.

Step 206, first ranging information returned by the target object based on the first ranging request is acquired.

For example, after receiving the first ranging request, the second UWB module of the target object generates the first ranging information based on the first ranging request; the first ranging information includes information of a time moment when the target object receives the first ranging request, and information of time moment when the second UWB module of the target object generates the first ranging information, which are used to calculate the distance between the target object and the autonomous mobile device.

In some examples, the first UWB module of the handling robot receives the first ranging information returned by the second UWB module of the work clothes based on the first ranging request. With the obtained first ranging information, the distance between the target object and the autonomous mobile device may be subsequently calculated based on the first ranging information.

Step 208, current position information of the target object is determined according to the first ranging information.

For example, after determining the first ranging information, the distance between the target object and the autonomous mobile device may be determined based on the first ranging information, and then the current position information of the target object may be determined. The current position information refers to position information of the target object relative to the autonomous mobile device.

In some embodiments, determining the current position information of the target object according to the first ranging information may include: calculating current distance information between the autonomous mobile device and the target object based on the first ranging information; and determining the current position information of the target object according to preset trajectory information of the autonomous mobile device and the current distance information.

The current distance information refers to the distance between the autonomous mobile device and the target object calculated at a current moment, for example, the distance between the autonomous mobile device and the target object is 2 meters. The preset trajectory information refers to trajectory information preset for the autonomous mobile device, such as moving trajectory information set for the handling robot to move from shelf 1 to shelf 2. The current position information refers to position information of the target object relative to the autonomous mobile device at the current moment. For example, the current position information may be that the target object is on the trajectory of the autonomous mobile device, is not on the trajectory of the autonomous mobile device, or may include coordinate information of the target object, etc.

For example, the current distance information may be calculated by using TOF ranging positioning, TWR ranging positioning, TDOA positioning, or other ranging methods. It should be noted that in embodiments of the present invention, the distance between the autonomous mobile device and the target object is obtained in real time, that is, the current distance information is obtained in real time, so that the case where the distance between the autonomous mobile device and the target object is short may be discovered in time, and the movement of the autonomous mobile device may be adjusted in time to avoid collision.

In some examples, the first UWB module of the handling robot obtains the first ranging information, calculates the current distance information between the first UWB module and the second UWB module of the work clothes based on the first ranging information, and determines that the target object is in the moving trajectory of the handling robot based on the current distance information and the preset trajectory information.

In some embodiments, calculating the current distance information between the autonomous mobile device and the target object based on the first ranging information may include: analyzing the first ranging request to determine a first moment when the autonomous mobile device generates the first ranging request; analyzing the first ranging information to determine a second moment when the target object receives the first ranging request and a third moment when the first ranging information is returned; determining a fourth moment when the first ranging information is received; determining a light wave transmission delay based on the first moment, the second moment, the third moment and the fourth moment; and calculating the current distance information based on a preset light wave transmission speed and the light wave transmission delay.

The first moment refers to a moment when the first UWB module of the autonomous mobile device generates the first ranging request; the second moment refers to a moment when the target object receives the first ranging request; the third moment refers to a moment when the target object sends the first ranging information; and the fourth moment refers to a moment when the first UWB module of the autonomous mobile device receives the first ranging information.

In some examples, as shown in FIG. 2B, after the first UWB module in the monitor mode on the handling robot detects Bluetooth information sent by the second UWB module in the announcer mode, it generates a UWB ranging request (i.e., the first ranging request), records a moment t1 when the UWB ranging request is generated, embeds the moment t1 into message 1, and sends the message 1 to the second UWB module in the announcer mode. After receiving the message 1, i.e., the UWB ranging request, the second UWB module in the announcer mode may obtain the moment t1, record a moment t2 when the UWB ranging request is received; embeds the moment t2 and a moment t3 into message 2, and sends the message 2 to the first UWB module in the monitor mode at the moment t3. The first UWB module in the monitor mode receives the message 2 at a moment t4, obtains four time points t1, t2, t3 and t4; determines a delay t of the light wave in transmission, derives t=((t4-t1)-(t3-t2))/2 from t1+t+t3-t2+t=t4; and calculates the current distance information based on the transmission delay and the transmission speed of the light wave.

It should be noted that a time scale of the autonomous mobile device may be different from a time scale of the target object, such as the existence of frequency offset, and t1 and t4 are timestamped according to the time scale of the autonomous mobile device, and t2 and t3 are timestamped according to the time scale of the target object, so calculating the delay of the light wave in transmission according to the first moment, the second moment, the third moment and the fourth moment ensures that the calculated delay is more accurate, thereby improving the accuracy of the current distance information.

In some embodiments, in order to further improve the accuracy of the position information of the target object, a direction of the target object may also be determined. For example, the autonomous mobile device may include an antenna array, and after calculating the current distance information between the autonomous mobile device and the target object based on the first ranging information, the method may also include: determining distance information between each antenna and the target object according to the first ranging trigger information received by each antenna of the antenna array; calculating angle information between the autonomous mobile device and the target object based on a phase difference between antennas and each distance information; and determining the direction of the target object relative to the autonomous mobile device based on the angle information and each distance information.

Two or more single antennas working at the same frequency are fed and spatially arranged according to certain requirements to form the antenna array. Each antenna in the antenna array receives the first ranging trigger information sent by the target object respectively; the distance between the antenna and the target object refers to a distance from the target object that sends the first ranging trigger information to the antenna of the autonomous mobile device; the phase difference refers to a difference between phases of two periodically changing physical quantities, and the physical quantity in the present invention is the first ranging trigger information sent by the target object, i.e., an electrical signal; and the angle information between the autonomous mobile device and the target object refers to an angle corresponding to a connecting line between the target object and each antenna.

In some examples, a UWB antenna array is installed on the autonomous mobile device, and the AOA technology may be used to obtain the direction of the target object relative to the robot, so as to further obtain relatively accurate position information of the target object. By determining relatively accurate current distance information, that is, relatively accurately determining the distance between the target object and the autonomous mobile device, it is convenient to subsequently adjust the moving trajectory of the autonomous mobile device based on the current distance information to avoid collision.

Step 210, the moving trajectory of the autonomous mobile device is adjusted based on the current position information.

The moving trajectory includes moving position information and moving speed information, the moving position information refers to a moving position of the autonomous mobile device, and the moving speed information refers to a moving speed of the autonomous mobile device. In embodiments of the present invention, when adjusting the moving trajectory of the autonomous mobile device based on the current position information, the moving speed of the autonomous mobile device and/or the position of the autonomous mobile device may be adjusted.

For example, after the current position information of the target object is determined, it may be determined based on the current position information whether the moving trajectory of the autonomous mobile device needs to be adjusted to avoid the occurrence of collision.

In some embodiments, adjusting the moving trajectory of the autonomous mobile device based on the current position information includes:
determining a preset moving trajectory of the autonomous mobile device;
determining whether the current position information of the target object overlaps with the preset moving trajectory in a case where the current distance information is less than or equal to a distance threshold;
in a case where the current position information of the target object does not overlap with the preset moving trajectory, calculating a first speed value based on a speed decrement value and a preset speed value, and controlling the autonomous mobile device to move based on the first speed value, where the first speed value is greater than 0;
in a case where the current position information of the target object overlaps with the preset moving trajectory, determining a moving trajectory direction of the autonomous mobile device, and determining whether the current position information is consistent with the moving trajectory direction;
in a case where the current position information is consistent with the moving trajectory direction, adjusting a moving speed of the autonomous mobile device to 0;
in a case where the current position information is not consistent with the moving trajectory direction, calculating a second speed value based on a speed increment value and the preset speed value, and controlling the autonomous mobile device to move based on the second speed value.

The preset moving trajectory refers to a moving route, a moving speed and other information preset for the autonomous mobile device; the distance threshold refers to a preset value used to determine whether the moving trajectory of the autonomous mobile device needs to be adjusted. In the case where the current distance information is less than or equal to the distance threshold, it means that the distance between the autonomous mobile device and the target object is relatively short, and the preset moving trajectory of the autonomous mobile device needs to be adjusted.

The speed decrement value refers to a speed value reduced from the preset speed value. For example, in the case where it is determined that the distance between the autonomous mobile device and the target object is too short, the speed may be adjusted from 5 km/h to 3 km/h based on the speed decrement value 2. The speed increment value refers to a speed value added to the preset speed value. For example, the speed may be adjusted from 5 km/h to 8 km/h based on the speed increment value 3. In applications, the speed increment value may be 0. The first speed value refers to a speed value obtained by subtracting the speed decrement value from the preset speed value, and the second speed value refers to a speed value obtained by adding the speed increment value to the preset speed value.

For example, as shown in FIG. 2C, there are moving handling robots 1, 2, 3 and 4 near the staff; when the staff approaches a handling robot to a certain distance threshold, the UWB module on the handling robot is able to monitor Bluetooth information and determine that the staff is approaching and that danger may occur, and then it will actively send a ranging task to the UWB module of the staff. When it is confirmed through the ranging that the distance from the staff meets a warning distance threshold, the handling robot will notify the driver to control the motor to decelerate to a safe speed and continue moving, and start real-time monitoring of the distance value to the staff, when the distance value becomes smaller and smaller and meets a stop distance threshold, the driver will be notified to control the motor to decelerate to a stationary state; when the distance value becomes larger and larger until it is greater than the warning distance threshold, the driver will be notified to accelerate to resume operation at the normal speed. As shown in FIG. 2C, the handling robot 1 and the handling robot 2 will be in a stopped state, the handling robot 3 will be in a movimg state at a low speed, and the handling robot 4 runs normally.

In some embodiments, two first UWB modules may be set on the autonomous mobile device, or three or more first UWB modules may be set on the autonomous mobile device, so that precise position information corresponding to the target object may be determined. Embodiments of the present invention do not limit the number of first UWB modules set on the autonomous mobile device.

In a case where a plurality of first UWB modules are set on the autonomous mobile device, the plurality of first UWB modules may all operate in the monitor mode, or some of the first UWB modules may operate in the monitor mode, and some of the first UWB modules may operate in the announcer mode.

In some examples, taking the case where three first UWB modules are provided on the handling robot as an example, the three first UWB modules are all in the monitor mode, and more reliable ranging and more accurate positioning may be achieved through the three first UWB modules, so that the handling robot may determine the position information of the staff carrying the second UWB module, achieve more accurate speed control, and thus improve efficiency.

For example, as shown in FIG. 2D, for AMR1, although it determines that the staff is within the stopping distance through ranging, AMR1 determines based on the accurate position of the staff that the staff is not on the forward route, so AMR1 may pass at a low speed. For AMR2, it determines that the staff is within the stopping distance through ranging, and AMR1 determines based on the accurate position of the staff that the staff is on the forward route, so AMR2 needs to slow down and stop. For AMR3, although it determines that the staff is within the stopping distance through ranging, AMR3 determines based on the accurate position of the staff that the staff is behind the forward route and does not affect its operation, so the corresponding moving speed of the AMR3 may be accelerated to leave fast.

In applications, the speed decrement value and the speed increment value may be set based on the current distance information. That is, the speed decrement value and the speed increment value may be adjusted based on the current distance information changed in real time, so as to avoid the occurrence of collisions caused by too fast or too slow speed.

It should be noted that the current distance information changes with the real-time movement of the target object and the autonomous mobile device. Therefore, in the case where it is detected that the current distance information is greater than the preset threshold, the autonomous mobile device may be re-controlled based on the preset speed value, that is, the original operating speed of the autonomous mobile device is restored to ensure the normal operation of the autonomous mobile device.

With the method for trajectory adjustment of an autonomous mobile device provided by the present invention, by setting at least one first UWB module on the autonomous mobile device, the autonomous mobile device may receive the first ranging trigger information sent by the target object, generate the first ranging request based on the first ranging trigger information to establish a communication connection between the target object and the autonomous mobile device; receive the first ranging information returned by the target object based on the first ranging request to calculate the distance between the target object and the autonomous mobile device; determine the current position information of the target object based on the first ranging information, and determine the moving trajectory of the autonomous mobile device based on the current position information, so as to avoid the occurrence of collision.

FIG. 3A shows a flow chart of a method for trajectory adjustment of an autonomous mobile device according to some embodiments of the present invention, the method is applied to the target object, the target object is provided with at least one second UWB module, the second UWB module includes a Bluetooth unit and a UWB chip. As shown in FIG. 3A, the method for trajectory adjustment of an autonomous mobile device includes the following steps.

Step 302, the Bluetooth of the second UWB module broadcasts first ranging trigger information.

For example, the target object is provided with the second UWB module, and the second UWB module is in an announcer mode, so that the first ranging trigger information may be broadcasted through the Bluetooth unit of the second UWB module. That is, the first ranging trigger information may be broadcasted by the Bluetooth unit of the second UWB module only in a case where the second UWB module of the target object is in the announcer mode.

Step 304, in a case of receiving a first ranging request returned by the autonomous mobile device based on the first ranging trigger information, the first ranging information is determined based on the first ranging request.

For example, the second UWB module provided on the target object may receive the first ranging request returned by the autonomous mobile device based on the first ranging trigger information sent by the target object; and the UWB chip in the second UWB module generates the first ranging information based on the first ranging request.

Step 306, the first ranging information is sent to the autonomous mobile device to make the autonomous mobile device adjust a moving trajectory of the autonomous mobile device based on the first ranging information.

For example, the second UWB module of the target object sends the first ranging information to the autonomous mobile device; the autonomous mobile device may calculate current distance information between the autonomous mobile device and the target object based on the first ranging information; determine current position information based on the current distance information, and determine how to adjust the moving trajectory of the autonomous mobile device according to the current position information.

In applications, a workspace may include a plurality of autonomous mobile devices and a plurality of target objects, and the method disclosed in the present invention is applicable to this situation, that is, one autonomous mobile device may simultaneously obtain information of a plurality of target objects, and one target object may also simultaneously obtain information of a plurality of autonomous mobile devices.

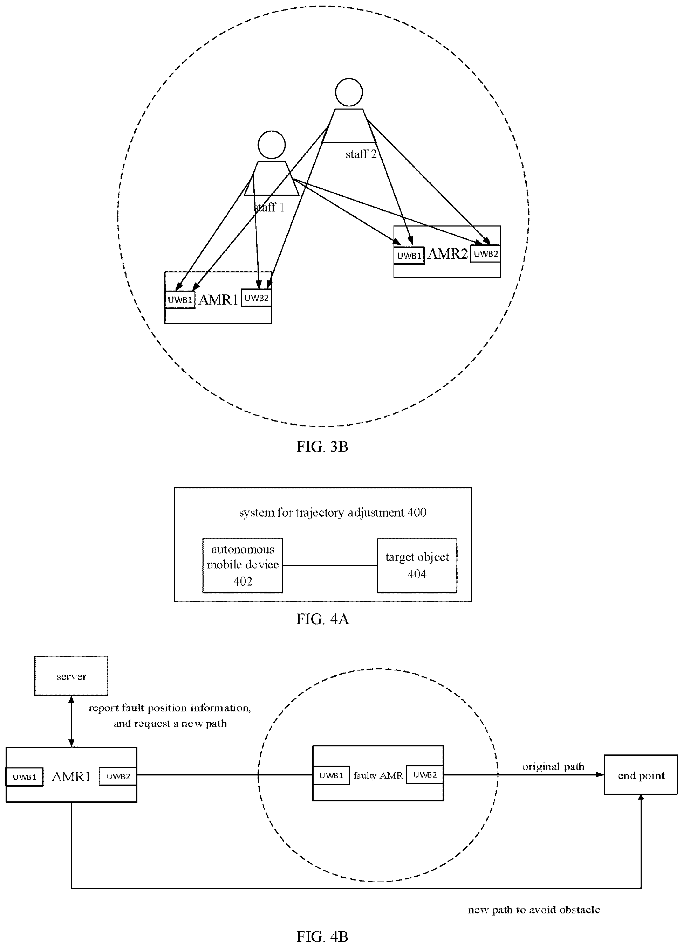

As shown in FIG. 3B, both staff 1 and staff 2 wear work clothes having a UWB module (i.e., the second UWB module); the UWB module of the work clothes is set to the announcer mode, and the UWB modules of robot 1 and robot 2 (i.e., the first UWB modules) are set to a monitor mode. When distances between the staffs and the robots reach a distance at which the Bluetooth units may communicate with one another, staff 1 may receive data sent by the UWB modules of robots 1 and 2, so that the moving trajectories of robots 1 and 2 relative to staff 1 may be adjusted; similarly, staff 2 may receive data sent by the UWB modules of robots 1 and 2, so that the moving trajectories of robots 1 and 2 relative to staff 2 may be adjusted.

With the method for trajectory adjustment of an autonomous mobile device provided by the present invention, by setting the second UWB module on the target object and setting the second UWB module to the announcer mode, the target object may continuously broadcast the first ranging trigger information to the outside, so that the autonomous mobile device may monitor the position of the target object in real time, and adjust its own speed and position in time to avoid the occurrence of collision.

FIG. 4A shows a schematic block diagram of a system for trajectory adjustment of an autonomous mobile device according to an embodiment of the present invention. The system 400 includes an autonomous mobile device 402 and a target object 404. The autonomous mobile device is provided with a first UWB module, and the target object 404 is provided with a second UWB module. The first UWB module is in a monitor mode, and the second UWB module is in an announcer mode. Both the first UWB module and the second UWB module include a Bluetooth unit and a UWB chip.

The target object 404 is configured to output first ranging trigger information by the Bluetooth unit of the second UWB module.

The autonomous mobile device 402 is configured to receive, by the Bluetooth unit of the first UWB module, the first ranging trigger information sent by the target object through, and send, by the UWB chip of the first UWB module, a first ranging request to the target object based on the first ranging trigger information.

The target object 404 is further configured to send first ranging information to the autonomous mobile device based on the first ranging request.

The autonomous mobile device 402 is further configured to determine current position information of the target object according to the first ranging information, and adjust the moving trajectory of the autonomous mobile device based on the current position information.

In applications, the autonomous mobile device may malfunction and cannot move along a preset moving trajectory normally. Therefore, in a case where device failure information is detected, the monitor mode of the first UWB module is adjusted to the announcer mode; the Bluetooth unit of the first UWB module outputs ranging trigger information of the autonomous mobile device. That is, in a case where the autonomous mobile device fails, the faulty autonomous mobile device may be taken as the target object to prevent other robots from colliding with the faulty autonomous mobile device.

In order to prevent the movement of other autonomous mobile devices from being affected by the faulty mobile device, the system also includes a target autonomous mobile device, and the target autonomous mobile device is configured to: receive fault ranging trigger information sent by the autonomous mobile device (i.e., the faulty autonomous mobile device); send a fault ranging request to the autonomous mobile device based on the fault ranging trigger information; determine fault position information of the autonomous mobile device according to current ranging information returned by the autonomous mobile device based on the fault ranging request; and report the fault position information to obtain obstacle avoidance trajectory information.

The fault position information refers to position information of the fault autonomous mobile device. After detecting the faulty device, the target autonomous mobile device may report the fault position information to a server to obtain a new moving path, so as to avoid congestion caused by the faulty device, and avoid the impact on the operation of non-faulty devices.

As shown in FIG. 4B, when a robot fails, the first UWB module of the robot will be switched to the announcer mode, and the first UWB module will periodically send Bluetooth broadcasts, and nearby robots will detect distance information. AMR1 may determine that the type of the target object is a robot through Bluetooth information interaction. In addition to stopping when approaching the faulty AMR, AMR1 will also actively report the position of the faulty AMR, and request a new path to achieve the obstacle avoidance function. That is, AMR1 moves according to a preset original path, and when detecting the faulty AMR on the way, AMR1 will stop moving and report the fault position information to the server, and request a new moving path; after the server sends the new moving path to AMR1, AMR1 moves towards the destination based on the new path.

By switching the UWB module of the faulty autonomous mobile device to the announcer mode, the faulty autonomous mobile device exists in the space as the target object, thus avoiding possible collisions with other autonomous mobile devices.

The system for trajectory adjustment of an autonomous mobile device disclosed in the present invention enhances the flexibility of ranging by setting UWB modules on the target object and the autonomous mobile object, that is, the UWB module does not need to be set in the space as a fixed anchor point; the position of the target object is calculated by the UWB module, which avoids the need to introduce a data center separately, and thus reducing processing costs.

In order to avoid ranging failure caused by UWB module failure, in embodiments of the present invention, a plurality of detection UWB modules may be set at fixed positions in the warehousing system to monitor the UWB module of the autonomous mobile device and/or the UWB module of the target object, so as to determine whether the UWB module of the autonomous mobile device and/or the UWB module of the target object are abnormal.

In some embodiments, in addition to the autonomous mobile device and the target object, the above-mentioned system may include the plurality of detection UWB modules. The plurality of detection UWB modules may be arranged at fixed positions in the warehousing system to detect the first UWB module on the autonomous mobile device and/or a fourth UWB module on the target object.

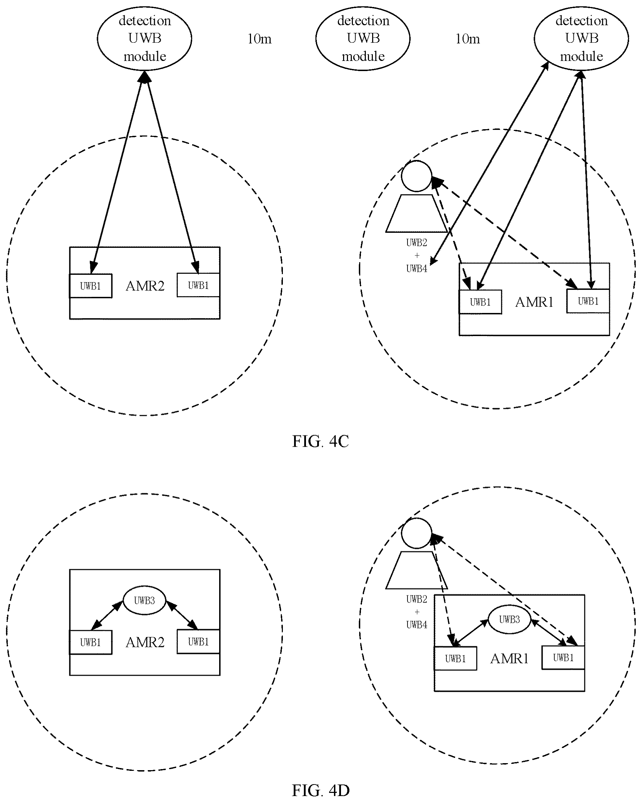

For example, the plurality of detection UWB modules may be evenly arranged at fixed positions in the warehousing system. In some examples, the plurality of detection UWB modules may be evenly arranged on a top of the warehousing system, and/or the plurality of detection UWB modules are evenly arranged at a plurality of charging stations in the warehousing system. Embodiments of the present invention do not limit the position of the plurality of detection UWB modules. The following embodiments are described with reference to an example where the plurality of detection UWBs modules are arranged on the top of the warehousing system (also referred to as the roof). For example, as shown in FIG. 4C, the detection UWB module may be set every 10 meters on the top of the warehousing system. Embodiments of the present invention do not limit the distance between two adjacent UWB modules.

In some examples, the plurality of detection UWB modules in the warehousing system are in the announcer mode, and the first UWB module of the autonomous mobile device and the fourth UWB module of the target object are in the monitor mode.

For example, the above-mentioned method for trajectory adjustment may also include that: the autonomous mobile device receives, by the Bluetooth unit of the first UWB module, second ranging trigger information sent by a target detection UWB module; the autonomous mobile device sends a second ranging request to the target detection UWB module through the UWB chip of the first UWB module based on the second ranging trigger information; obtains second ranging information returned by the target detection UWB module based on the second ranging request, and determines a distance between the autonomous mobile device and the target detection UWB module based on the second ranging information.

For example, as shown in FIG. 4C, taking a case where an AMR includes two first UWB modules (UWB1 shown in FIG. 4C) arranged at front and back in the monitor mode as an example, the UWB1 in the monitor mode on AMR2 may communicate with the target detection UWB module on the top of the warehousing system to determine the distance between the autonomous mobile device and the target detection UWB module. At the same time, the UWB1 in the monitor mode on AMR2 may also communicate with the second UWB module (UWB2 shown in FIG. 4C) in the announcer mode on the staff to determine the distance between the autonomous mobile device and the staff.

In some examples, the second ranging trigger information broadcasted by the target detection UWB module on the top of the warehousing system and the first ranging trigger information broadcasted by the UWB module on the staff may respectively carry identification information, and the identification information is used to indicate the ranging trigger information is broadcasted by which role. Therefore, when the AMR receives different ranging trigger information, the AMR is able to determine the ranging trigger information is sent by the UWB module on the top of the warehousing system or by the UWB module on the staff.

In some examples, a media access control address (MAC) of the second ranging information sent by the target detection UWB module on the top of the warehousing system is different from that of the first ranging information sent by the UWB module on the staff. Therefore, when the AMR receives different ranging information, the AMR is able to determine whether the ranging information is sent by the UWB module on the top of the warehousing system or the UWB on the staff.

In some examples, the UWB module in the monitor mode on the AMR may detect the second ranging trigger information broadcasted by the target detection UWB module on the top of the warehousing system at fixed time intervals; and the target detection UWB module on the top of the warehousing system may continuously broadcast the second ranging trigger information, or may broadcast one piece of second ranging trigger information every two second pieces of ranging trigger information.

If the distance between the autonomous mobile device and the target detection UWB module is within a first distance threshold range, it is determined that the first UWB module set on the autonomous mobile device is normal; if the distance between the autonomous mobile device and the target detection UWB module is outside the first distance threshold range, or if the autonomous mobile device does not receive the second ranging trigger information sent by the target detection UWB module, it is determined that the first UWB module set on the autonomous mobile device is abnormal and/or the target detection UWB module is abnormal, and the autonomous mobile device is controlled to stop moving.

For example, the first distance threshold range is related to parameters such as a height of the AMR, an installation height of the detection UWB module (such as the roof height), or a distance between two adjacent detection UWB modules.

For example, as shown in FIG. 4C, if UWB1 of AMR2 determines that the distance between the AMR2 and the target detection UWB module on the roof (such as on the top of the warehousing system) is not within the first distance threshold range, or the UWB1 of the AMR cannot receive the second ranging trigger information sent by the target detection UWB module on the roof, it is determined that the UWB1 on the AMR and/or the target detection UWB module on the roof is abnormal, and the robot stops moving. If the UWB1 of the AMR2 determines that the distance between the AMR2 and the staff is close, the AMR2 is controlled to slow down or stop moving.

For example, the target detection UWB module may be a detection UWB module among a plurality of detection UWB modules that is communicable with the first UWB module on the autonomous mobile device. In some examples, one or more target detection UWB modules may communicate with the first UWB module on the autonomous mobile device. Embodiments of the present invention do not limit the number of target detection UWB modules, and the number of target detection UWB modules is related to the set distance between the plurality of detection UWB modules.

In a case where a plurality of target detection UWB modules are communicated with the first UWB module of the autonomous mobile device, whether the first UWB module is abnormal may be further determined by determining whether the distance between each target detection UWB module and the first UWB module is within the first distance threshold range. For example, when the distance between the first UWB module of the autonomous mobile device and the target detection UWB module 1 is not within the first distance threshold range, but the distance between the first UWB module of the autonomous mobile device and the target detection UWB module 2 is within the first distance threshold range, it may be further determined that the first UWB module of the autonomous mobile device is normal, and the target detection UWB module 1 is abnormal.

In some embodiments, in addition to at least one second UWB module, the target object may also be provided with at least one fourth UWB module, the fourth UWB module is in the monitor mode, and the fourth UWB module may communicate with the second UWB module of the target object, and may also communicate with the detection UWB module on the top of the warehousing system. With reference to FIG. 4C, a communication process between the fourth UWB module of the target object and the second UWB module of the target object, and a communication process between the fourth UWB module of the target object and the target detection UWB module provided on the top of the warehousing system are introduced below.

For example, the above-mentioned method for trajectory adjustment may also include: receiving, by a Bluetooth unit of the fourth UWB module, fourth ranging trigger information sent by a target detection UWB module; sending, by a UWB chip of the fourth UWB module, a fourth ranging request to the target detection UWB module based on the fourth ranging trigger information; acquiring fourth ranging information returned by the target detection UWB module based on the fourth ranging request, and determining a distance between the target object and the target detection UWB module based on the fourth ranging information. It may be understood that the fourth ranging trigger information sent by the target detection UWB module may be the same as the second ranging trigger information.

If the distance between the target object and the target detection UWB module is within a third distance threshold range, it is determined that the fourth UWB module set on the target object is normal; if the distance between the target object and the target detection UWB module is outside the third distance threshold range, or if the fourth UWB module does not receive the fourth ranging trigger information sent by the target detection UWB module, it is determined that the fourth UWB module set on the target object is abnormal and/or the target detection UWB module is abnormal, and alarm information is output.

For example, the third distance threshold range is related to parameters such as a height of the target object, an installation height of the detection UWB module (such as the roof height), or a distance between two adjacent detection UWB modules.

For example, as shown in FIG. 4C, explanations will be made with reference to an example where the safety work clothes worn by the staff are provided with the second UWB module in the announcer mode (UWB2 shown in FIG. 4C) and the fourth UWB module in the monitor mode (UWB4 shown in FIG. 4C). The UWB4 in the monitor mode may communicate with the target detection UWB module in the announcer mode to determine the distance between the staff and the roof. If the distance between the UWB4 on the staff and the target detection UWB module is outside the third distance threshold range, or the UWB4 does not receive the fourth ranging trigger information broadcasted by the target detection UWB module, it is determined that the safety work clothes on the staff or the target detection UWB module on the roof may be abnormal. When it is determined that the safety work clothes are abnormal or may be abnormal, lighting, sounding, vibrating or other alarms may be triggered to inform the staff that the safety work clothes need to be changed. In order to ensure the safe operation of the warehousing system, a robot control system may also be actively informed to trigger emergency stop of the system to stop all robots in the site, thereby ensuring the safety of personnel.

For example, the target detection UWB module may be a detection UWB module that may communicate with the fourth UWB module of the target object among a plurality of detection UWB modules. In some examples, one or more target detection UWB modules may communicate with the fourth UWB module of the target object. Embodiments of the present invention do not limit the number of the target detection UWB modules, and the number of the target detection UWB modules is related to the set distance between the plurality of detection UWB modules.

In a case where a plurality of target detection UWB modules are communicated with the fourth UWB module of the target object, it may be further determined whether the fourth UWB module is abnormal by determining whether the distance between each target detection UWB module and the fourth UWB module is within the third distance threshold range. For example, when the distance between the fourth UWB module of the target object and the target detection UWB module 1 is not within the third distance threshold range, but the distance between the fourth UWB module of the target object and the target detection UWB module 2 is within the third distance threshold range, it may be further determined that the fourth UWB module of the target object is normal, and the target detection UWB module 1 is abnormal.

For example, the method for trajectory adjustment may also include: broadcasting fifth ranging trigger information by the Bluetooth unit of the second UWB module of the target object; receiving the fifth ranging trigger information by a Bluetooth unit of the fourth UWB module of the target object; sending, by a UWB chip of the fourth UWB module, a fifth ranging request to the second UWB module based on the fifth ranging trigger information; determining, by the second UWB module, fifth ranging information based on the fifth ranging request and sending the fifth ranging information to the fourth UWB module, in a case where the second UWB module receives the fifth ranging request; determining, by the fourth UWB module, a distance between the fourth UWB module and the second UWB module in the target device based on the fifth ranging information. It may be understood that the fifth ranging trigger information sent by the second UWB module of the target object may be the same as the first ranging trigger information.

If the distance between the fourth UWB module and the second UWB module in the target object is within a fourth distance threshold range, it is determined that the fourth UWB module set on the target object is normal; if the distance between the fourth UWB module and the second UWB module in the target object is outside the fourth distance threshold range, or if the fourth UWB module does not receive the fifth ranging trigger information sent by the second UWB module, it is determined that the fourth UWB module set on the target object is abnormal and/or the second UWB module is abnormal, and alarm information is output.

For example, the fourth distance threshold range is related to parameters such as a design distance between the fourth UWB module and the second UWB module in the safety work clothes, a production process, etc.

For example, as shown in FIG. 4C, explanations will be made with reference to an example where the safety work clothes worn by the staff are provided with the second UWB module (UWB2 shown in FIG. 4C) in the announcer mode and the fourth UWB module (UWB4 shown in FIG. 4C) in the monitor mode. The UWB4 in the monitor mode may communicate with the UWB2 in the announcer mode to determine the distance between the UWB2 and the UWB4. If the distance between the UWB2 and the UWB4 on the staff is outside the fourth distance threshold range, or the UWB4 does not receive the fifth ranging trigger information broadcasted by the UWB2, it is determined that the safety work clothes on the staff are abnormal, and lighting, sounding, vibrating or other alarms may be triggered to inform the staff that the safety work clothes need to be changed. In order to ensure the safe operation of the warehousing system, a robot control system may also be actively informed to trigger emergency stop of the system to stop all robots in the site, thereby ensuring the safety of personnel.

In order to avoid ranging failure caused by UWB module failure, the plurality of detection UWB modules may be set at fixed positions in the warehousing system, and at least one third UWB module in the announcer mode may be set on the autonomous mobile device. The autonomous mobile device may also be monitored through communication between the third UWB module in the announcer mode and the first UWB module in the monitor mode on the autonomous mobile device.

In some embodiments, in addition to at least one first UWB module, the autonomous mobile device may also be provided with at least one third UWB module, and the third UWB module is in the announcer mode and may broadcast third ranging trigger information.

For example, the method for trajectory adjustment may also include: broadcasting third ranging trigger information by a Bluetooth unit of the third UWB module; receiving the third ranging trigger information by the Bluetooth unit of the first UWB module; sending a third ranging request to the third UWB module by the UWB chip of the first UWB module based on the third ranging trigger information; determining, by the third UWB module, third ranging information based on the third ranging request, and sending the third ranging information to the first UWB module, in a case where the third UWB module receives the third ranging request; determining, by the first UWB module, a distance between the first UWB module and the third UWB module in the autonomous mobile device based on the third ranging information.

If the distance between the first UWB module and the third UWB module in the autonomous mobile device is within a second distance threshold range, it is determined that the first UWB module set on the autonomous mobile device is normal; if the distance between the first UWB module and the third UWB module in the autonomous mobile device is outside the second distance threshold range, or the first UWB module does not receive the third ranging trigger information sent by the third UWB module, it is determined that the first UWB module and/or the third UWB module set on the autonomous mobile device is abnormal, and the autonomous mobile device is controlled to stop moving.

For example, the second distance threshold range is related to parameters such as a design distance between the first UWB module and the third UWB module in the autonomous mobile device, a production process, etc.

For example, as shown in FIG. 4D, taking the case where the AMR is provided with the third UWB module in the announcer mode (UWB3 shown in FIG. 4C) and two first UWB modules in the monitor mode (UWB1 shown in FIG. 4C) as an example, the UWB1 in the monitor mode may communicate with the UWB3 in the announcer mode to determine the distance between the UWB1 and the UWB3. If the distance between the UWB1 and the UWB3 on the AMR is outside the second distance threshold range, or the UWB1 does not receive the third ranging trigger information broadcasted by the UWB3, it is determined that the UWB1 and/or the UWB3 on the AMR is abnormal, and the AMR stops moving. While communicating with the UWB3 of the AMR, the UWB1 of the AMR may also communicate with the UWB2 in the announcer mode on the staff to determine the distance between the AMR and the staff. If the distance between the AMR and the staff is short, the AMR may slow down or stop moving.

For example, as shown in FIG. 4D, the safety work clothes worn by the staff may be provided with the second UWB module in the announcer mode (UWB2 shown in FIG. 4D) and the fourth UWB module in the monitor mode (UWB4 shown in FIG. 4D), and the UWB4 may communicate with the UWB2 to determine the distance between the UWB2 and the UWB4. If it is determined that the distance between the UWB2 and the UWB4 is outside the fourth distance threshold range, or if the UWB4 does not receive the fifth ranging trigger information broadcasted by the UWB2, it is determined that the safety work clothes worn by the staff are abnormal, and lighting, sounding, vibrating or other alarms may be triggered to inform the staff that the safety work clothes need to be changed. In order to ensure the safe operation of the warehousing system, a robot control system may also be actively informed to trigger emergency stop of the system to stop all robots in the site, thereby ensuring the safety of personnel.

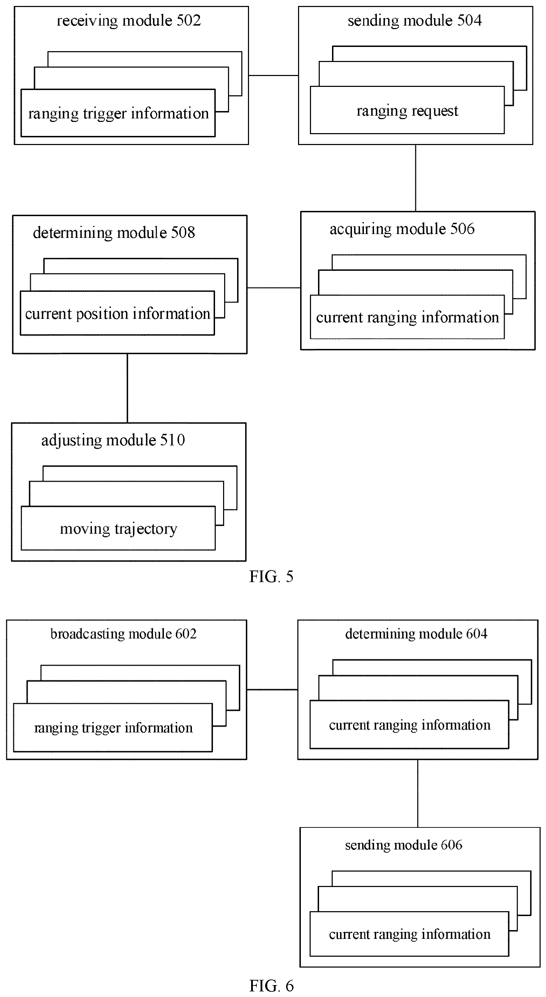

Corresponding to the above method embodiments, the present invention also provides embodiments of an apparatus for trajectory adjustment of an autonomous mobile device applicable to the autonomous mobile device. FIG. 5 shows a schematic structural diagram of an apparatus for trajectory adjustment of an autonomous mobile device applicable to the autonomous mobile device according to some embodiments of the present invention. As shown in FIG. 5, the apparatus includes:
a receiving module 502, configured to receive, by a Bluetooth unit of a first UWB module, first ranging trigger information sent by a target object, where the target object is provided with at least one second UWB module;
a sending module 504, configured to send, by a UWB chip of the first UWB module, first ranging request to the target object based on the first ranging trigger information;
an acquiring module 506, configured to acquire first ranging information returned by the target object based on the first ranging request;
a determining module 508, configured to determine current position information of the target object according to the first ranging information; and
an adjusting module 510, configured to adjust a moving trajectory of the autonomous mobile device based on the current position information of the target object.

In some embodiments, the determining module 508 is further configured to: calculate current distance information between the autonomous mobile device and the target object based on the first ranging information; and determine the current position information of the target object according to preset trajectory information of the autonomous mobile device and the current distance information.

In some embodiments, the determining module 508 is further configured to: analyze the first ranging request to determine a first moment when the autonomous mobile device generates the first ranging request; analyze the first ranging information to determine a second moment when the target object receives the first ranging request and a third moment when the first ranging information is returned; determine a fourth moment when the first ranging information is received; determine a light wave transmission delay according to the first moment, the second moment, the third moment and the fourth moment; and calculate the current distance information according to a preset light wave transmission speed and the light wave transmission delay.

In some embodiments, the determining module 508 is further configured to: determine distance information between each antenna and the target object according to the first ranging trigger information received by each antenna in an antenna array; calculate angle information between the autonomous mobile device and the target object based on a phase difference between antennas and each distance information; and determine a direction of the target object relative to the autonomous mobile device according to the angle information and each distance information.

In some embodiments, the adjusting module 510 is further configured to: determine a preset moving trajectory of the autonomous mobile device; determine whether the current position information of the target object overlaps with the preset moving trajectory in a case where the current distance information is less than or equal to a distance threshold; in a case where the current position information of the target object does not overlap with the preset moving trajectory, calculate a first speed value based on a speed decrement value and a preset speed value, and control the autonomous mobile device based on the first speed value, where the first speed value is greater than 0; in a case where the current position information of the target object overlaps with the preset moving trajectory, determine a moving trajectory direction of the autonomous mobile device, and determine whether the current position information is consistent with the moving trajectory direction; in a case where the current position information is consistent with the moving trajectory direction, adjust a moving speed of the autonomous mobile device to 0; in a case where the current position information is not consistent with the moving trajectory direction, calculate a second speed value based on a speed increment value and the preset speed value, and control the autonomous mobile device based on the second speed value.

In some embodiments, the speed decrement value and the speed increment value are set based on the current distance information.

In some embodiments, the apparatus further includes: a controlling module, configured to control the autonomous mobile device based on the preset speed value, in a case where the current distance information is greater than the preset threshold.

In some embodiments, the first UWB module of the autonomous mobile device is in a monitor mode, and the first UWB module is configured to send the first ranging request based on the received first ranging trigger information in the monitor mode.

In some embodiments, the apparatus further includes: a switching module, configured to switch the first UWB module from a monitor mode to an announcer mode in a case of a failure of the autonomous mobile device, and the first UWB module is configured to broadcast fault ranging trigger information in the announcer mode.

In some embodiments, the receiving module 502 is further configured to: receive second ranging trigger information of a target detection UWB module by the Bluetooth unit of the first UWB module; where a plurality of detection UWB modules are arranged respectively at a plurality of fixed positions in a warehousing system, and the plurality of detection UWB modules include the target detection UWB module. The sending module 504 is further configured to send a second ranging request to the target detection UWB module by the UWB chip of the first UWB module based on the second ranging trigger information. The acquiring module 506 is further configured to acquire second ranging information returned by the target detection UWB module based on the second ranging request. The determining module 508 is further configured to: determine a distance between the autonomous mobile device and the target detection UWB module based on the second ranging information; in a case where the distance between the autonomous mobile device and the target detection UWB module is within a first distance threshold range, determine that the first UWB module set on the autonomous mobile device is normal; in a case where the distance between the autonomous mobile device and the target detection UWB module is outside the first distance threshold range, determine that the first UWB module set on the autonomous mobile device is abnormal and/or the target detection UWB module is abnormal, and control the autonomous mobile device to stop moving.

In some embodiments, the determining module 508 is further configured to: in a case where the first UWB module does not receive the second ranging trigger information sent by the target detection UWB module, determine that the first UWB module set on the autonomous mobile device is abnormal and/or the target detection UWB module is abnormal, and control the autonomous mobile device to stop moving.

In some embodiments, the plurality of detection UWB modules are evenly arranged on a top of the warehousing system, and/or the plurality of detection UWB modules are evenly arranged at a plurality of charging stations of the warehousing system.

In some embodiments, the target detection UWB module is in an announcer mode, and the first UWB module is in a monitor mode.

In some embodiments, the autonomous mobile device is provided with at least one third UWB module, and the apparatus further includes: a broadcasting module configured to broadcast third ranging trigger information by a Bluetooth unit of the third UWB module. The receiving module 502 is further configured to receive the third ranging trigger information by the Bluetooth unit of the first UWB module. The sending module 504 is further configured to send a third ranging request to the third UWB module by the UWB chip of the first UWB module based on the third ranging trigger information. The determining module 508 is further configured to: determine, by the third UWB module, third ranging information based on the third ranging request, and send the third ranging information to the first UWB module, in a case where the third UWB module receives the third ranging request; determine a distance between the first UWB module and the third UWB module in the autonomous mobile device based on the third ranging information; in a case where the distance between the first UWB module and the third UWB module in the autonomous mobile device is within a second distance threshold range, determine that the first UWB module set on the autonomous mobile device is normal; in a case where the distance between the first UWB module and the third UWB module in the autonomous mobile device is outside the second distance threshold range, determine that the first UWB module and/or the third UWB module set on the autonomous mobile device is abnormal, and control the autonomous mobile device to stop moving.

In some embodiments, in a case where the first UWB module does not receive the third ranging trigger information sent by the third UWB module, it is determined that the first UWB module and/or the third UWB module set on the autonomous mobile device is abnormal, and control the autonomous mobile device to stop moving.

In some embodiments, the third UWB module of the autonomous mobile device is in an announcer mode, and the first UWB module of the autonomous mobile device is in a monitor mode.

The apparatus for trajectory adjustment applicable to an autonomous mobile device according to the present invention receives the first ranging trigger information sent by the target object, generates the first ranging request based on the first ranging trigger information to establish the communication connection between the target object and the autonomous mobile device; receives the first ranging information returned by the target object based on the first ranging request to calculate the distance between the target object and the autonomous mobile device; determines the current position information of the target object based on the first ranging information, and determines the moving trajectory of the autonomous mobile device based on the current position information, thereby avoiding the occurrence of collision. Moreover, the UWB module of the autonomous mobile device may communicate with the detection UWB on the roof and/or the UWB on the autonomous mobile device to determine whether the UWB module on the autonomous mobile device is abnormal, and control the autonomous mobile device to stop moving in a case where the autonomous mobile device fails, thereby avoiding the occurrence of collision.

Corresponding to the above method embodiments, the present invention also provides embodiments of an apparatus for trajectory adjustment of an autonomous mobile device, which is applicable to a target object. FIG. 6 shows a schematic structural diagram of an apparatus for trajectory adjustment of an autonomous mobile device applicable to the target object according to an embodiment of the present invention. As shown in FIG. 6, the apparatus includes:
a broadcast module 602, configured to broadcast first ranging trigger information by a Bluetooth unit of a second UWB module;
a determining module 604, configured to determine first ranging information based on a first ranging request in a case of receiving the first ranging request returned by the autonomous mobile device based on the first ranging trigger information; and
a sending module 606, configured to send the first ranging information to the autonomous mobile device to make the autonomous mobile device adjust a moving trajectory of the autonomous mobile device based on the first ranging information.

In some embodiments, the target object is provided with at least one fourth UWB module, and the apparatus further includes: a receiving module and an acquiring module. The receiving module is configured to receive, by a Bluetooth unit of the fourth UWB module, fourth ranging trigger information sent by a target detection UWB module. A plurality of detection UWB modules are arranged respectively at a plurality of fixed positions in a warehousing system, and the plurality of detection UWB modules include the target detection UWB module. The sending module 606 is further configured to send, by a UWB chip of the fourth UWB module, a fourth ranging request to the target detection UWB module based on the fourth ranging trigger information. The acquiring module is configured to acquire fourth ranging information returned by the target detection UWB module based on the fourth ranging request. The determining module 604 is further configured to determine a distance between the target object and the target detection UWB module based on the fourth ranging information; in a case where the distance between the target object and the target detection UWB module is within a third distance threshold range, determine that the fourth UWB module set on the target object is normal; in a case where the distance between the target object and the target detection UWB module is outside the third distance threshold range, determine that the fourth UWB module set on the target object is abnormal and/or the target detection UWB module is abnormal, and output alarm information.

In some embodiments, in a case where the fourth UWB module does not receive the fourth ranging trigger information sent by the target detection UWB module, it is determined that the fourth UWB module set on the target object is abnormal and/or the target detection UWB module is abnormal, and alarm information is output.

In some embodiments, the plurality of detection UWB modules are evenly arranged on a top of the warehousing system, and/or the plurality of detection UWB modules are evenly arranged at a plurality of charging stations of the warehousing system.

In some embodiments, the target detection UWB module is in an announcer mode, and the fourth UWB module is in a monitor mode.

In some embodiments, the target object is provided with at least one fourth UWB module. The broadcast module 602 is further configured to broadcast fifth ranging trigger information by the Bluetooth unit of the second UWB module. The receiving module is further configured to receive the fifth ranging trigger information by a Bluetooth unit of the fourth UWB module. The sending module 606 is further configured to send, by a UWB chip of the fourth UWB module, a fifth ranging request to the second UWB module based on the fifth ranging trigger information. The determining module 604 is further configured to: determine fifth ranging information based on the fifth ranging request and send the fifth ranging information to the fourth UWB module, in a case where the second UWB module receives the fifth ranging request; determine a distance between the fourth UWB module and the second UWB module in the target device based on the fifth ranging information; in a case where the distance between the fourth UWB module and the second UWB module in the target object is within a fourth distance threshold range, determine that the fourth UWB module set on the target object is normal; in a case where the distance between the fourth UWB module and the second UWB module in the target object is outside the fourth distance threshold range, determine that the fourth UWB module and/or the second UWB module set on the target object is abnormal, and output alarm information.

In some embodiments, in a case where the fourth UWB module does not receive the fifth ranging trigger information sent by the second UWB module, it is determined that the fourth UWB module and/or the second UWB module set on the target object is abnormal, and alarm information is output.

In some embodiments, the second UWB module is in an announcer mode, and the fourth UWB module is in a monitor mode.

In the apparatus for trajectory adjustment of an autonomous mobile device applicable to the target object according to the present invention, by setting the second UWB module on the target object and setting the second UWB module to the announcer mode, the target object may continuously broadcast the ranging trigger information to the outside, so that the autonomous mobile device may monitor the position of the target object in real time, and adjust its own speed and position in time to avoid collision. In addition, by setting the fourth UWB module on the target object and setting the fourth UWB module to the monitor mode, the fourth UWB module may communicate with the detection UWB module or the second UWB module at the fixed position to determine whether the UWB module on the target object is abnormal, and output the alarm information in a case where the the UWB module on the target object may be abnormal, so as to ensure the safety of personnel.

The above describes example embodiments of the apparatus for trajectory adjustment of the autonomous mobile device. It should be noted that the technical solutions of the apparatus for trajectory adjustment of the autonomous mobile device have the same concept as that of the method for trajectory adjustment of the autonomous mobile device, and some details not described in detail in the technical solutions of the apparatus for trajectory adjustment of the autonomous mobile device may refer to the description of the technical solutions of the method for trajectory adjustment of the autonomous mobile device.

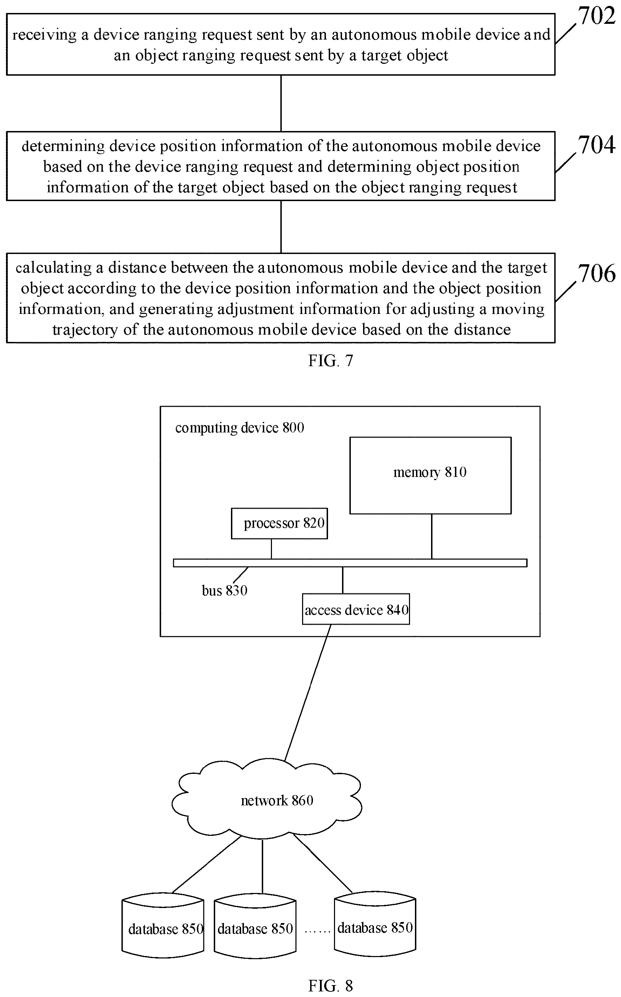

FIG. 7 shows a flow chart of a method for trajectory adjustment of an autonomous mobile device according to an embodiment of the present invention, the method is applied to a UWB base station, the UWB base station is provided with at least one fifth UWB module, the at least one fifth UWB module includes a Bluetooth unit and a UWB chip. The method includes the following steps.

Step 702, a device ranging request sent by an autonomous mobile device is received, and an object ranging request sent by a target object is received.

Step 704, device position information of the autonomous mobile device is determined based on the device ranging request, and object position information of the target object is determined based on the object ranging request.

Step 706, a distance between the autonomous mobile device and the target object is calculated according to the device position information and the object position information, and adjustment information for adjusting a moving trajectory of the autonomous mobile device is generated based on the distance.

For example, in addition to the above-mentioned interaction between the second UWB module of the target object and the first UWB module of the autonomous mobile device to adjust the moving trajectory of the autonomous mobile device, the UWB base station may also be set, and the UWB base station determines position information of the target object and the autonomous mobile device, and the UWB base station sends the adjustment information of the movement rule to the autonomous mobile device.

The device ranging request refers to a request for the calculation of the position information of the autonomous mobile device at the current moment; the object ranging request refers to a request for the calculation of the position information of the target object at the current moment; the device position information refers to position information corresponding to the autonomous mobile device at the current moment; the object position information refers to position information corresponding to the target object at the current moment; the adjustment information of the moving trajectory of the autonomous mobile device refers to information for adjusting the moving trajectory of the autonomous mobile device in the case where the distance between the autonomous mobile device and the target object is less than a preset threshold, such as increasing or decreasing the moving speed of the autonomous mobile device or setting a new moving trajectory, etc.

The above-mentioned method for trajectory adjustment of the autonomous mobile device applicable to the UWB base station may also be used to realize the adjustment of the moving trajectory of the autonomous mobile device, but the UWB base station needs to be set in advance.

FIG. 8 shows a block diagram of a computing device 800 according to some embodiments of the present invention. The components of the computing device 800 include but are not limited to a memory 810 and a processor 820. The processor 820 is connected to the memory 810 via a bus 830, and a database 850 is used to store data.

The computing device 800 also includes an access device 840 that enables the computing device 800 to communicate via one or more networks 860. Examples of these networks include a public switched telephone network (PSTN), a local area network (LAN), a wide area network (WAN), a personal area network (PAN), or a combination of communication networks such as Internet. The access device 840 may include one or more of any type of network interfaces (e.g., network interface controller (NIC)) of wired or wireless, such as an IEEE 802.11 wireless local area network (WLAN) wireless interface, a world-wide interoperability for microwave access (Wi-MAX) interface, an Ethernet interface, a universal serial bus (USB) interface, a cellular network interface, a Bluetooth interface, a near field communication (NFC) interface, or the like.

In an embodiment of the present invention, the above components of the computing device 800 and other components not shown in FIG. 8 may also be connected to each other, for example, through a bus. It should be understood that the block diagram of the computing device shown in FIG. 8 is illustrative and is not intended to limit the scope of the present invention. Those skilled in the art may add or replace other components as needed.

The computing device 800 may be any type of stationary or mobile computing device, including a mobile computer or mobile computing device (e.g., a tablet computer, a personal digital assistant, a laptop computer, a notebook computer, a netbook, etc.), a mobile phone (e.g., a smart phone), a wearable computing device (e.g., a smart watch, smart glasses, etc.), or other types of mobile devices, or a stationary computing device such as a desktop computer or a personal computer (PC). The computing device 700 may also be a mobile or stationary server.

When the processor 820 executes the computer instructions, the steps of the method for trajectory adjustment of the autonomous mobile device are implemented.

The above is a schematic solution of the computing device according to embodiments of the present invention. It should be noted that the technical solution of the computing device has the same concept as that of technical solutions of the method for trajectory adjustment of the autonomous mobile device as described above, and details not described in detail in the technical solution of the computing device may refer to the description of the technical solutions of the method for trajectory adjustment of the autonomous mobile device as described above.

An embodiment of the present invention further provides a computer-readable storage medium having stored therein computer instructions that, when executed by a processor, cause the steps of the method for trajectory adjustment of an autonomous mobile device as described above to be implemented.

The above is a schematic solution of a computer-readable storage medium according to embodiments of the present invention. It should be noted that the technical solution of the storage medium has the same concept as that of technical solutions of the method for trajectory adjustment of the autonomous mobile device as described above, and details not described in detail in the technical solution of the storage medium may refer to the description of the technical solutions of the method for trajectory adjustment of the autonomous mobile device as described above.

The above describes some embodiments of the present invention. Other embodiments are within the scope of the appended claims. In some cases, the actions or steps described in the claims may be performed in an order different from that described in embodiments of the present invention and can still achieve the desired results. In addition, the process depicted in the accompanying drawings does not necessarily require the specific order or continuous order as shown to achieve the desired results. In some embodiments, multitasking and parallel processing are also possible or may be advantageous.

Computer instructions include computer program codes, which may be in source code form, object code form, executable files or some intermediate form, etc. The computer readable media may include: any entity or device capable of carrying computer program codes, recording media, USB flash drive, mobile hard disk, magnetic disk, optical disk, computer memory, read-only memory (ROM), random access memory (RAM), electric carrier signals, telecommunication signals, and software distribution media, etc. It should be noted that the contents included in the computer readable media may be appropriately increased or decreased according to the requirements of legislation and patent practice in a jurisdiction. For example, in some jurisdictions, according to legislation and patent practice, the computer readable media do not include electric carrier signals and telecommunication signals.

It should be noted that, for the above various method embodiments, for the sake of simplicity of description, they are expressed as combinations of a series of actions, but those skilled in the art should be aware that embodiments of the present invention are not limited by the described action sequence, because according to embodiments of the present invention, certain steps may be performed in other sequences or may be performed concurrently. In addition, those skilled in the art should also be aware that embodiments described in the specification are preferred embodiments, and the involved actions and modules are not necessarily required by embodiments of the present invention.

In the above embodiments, the description of each embodiment has its own emphasis. For parts that are not described in detail in a certain embodiment, reference may be made to the relevant descriptions of other embodiments.

The above embodiments of the present invention are used to help explain the present invention. The optional embodiments do not elaborate all the details, nor do they limit present invention to these embodiments as described. Apparently, many modifications and changes may be made according to the content of the embodiments in the present invention. These embodiments selected and described in detail in the present invention are to better explain the principles and applications of the embodiments of the present invention, to make those skilled in the art to better understand and use the present invention. The present invention is limited by the claims and their whole scope and equivalents.

## Claims

1. A method for trajectory adjustment of an autonomous mobile device, applicable to the autonomous mobile device, wherein the autonomous mobile device is provided with at least one first ultra wide band (UWB) module comprising a Bluetooth unit and a UWB chip, and the method comprises:
receiving, by the Bluetooth unit of the first UWB module, first ranging trigger information sent by a target object, wherein the target object is provided with at least one second UWB module;
sending, by the UWB chip of the first UWB module, first ranging request to the target object based on the first ranging trigger information;
acquiring first ranging information returned by the target object based on the first ranging request;
determining current position information of the target object according to the first ranging information; and
adjusting a moving trajectory of the autonomous mobile device based on the current position information of the target object.

2. The method according to claim 1, wherein determining the current position information of the target object according to the first ranging information comprises:
calculating current distance information between the autonomous mobile device and the target object based on the first ranging information; and
determining the current position information of the target object according to preset trajectory information of the autonomous mobile device and the current distance information.

3. The method according to claim 2, wherein calculating the current distance information between the autonomous mobile device and the target object based on the first ranging information comprises:
analyzing the first ranging request to determine a first moment when the autonomous mobile device generates the first ranging request;
analyzing the first ranging information to determine a second moment when the target object receives the first ranging request and a third moment when the first ranging information is returned;
determining a fourth moment when the first ranging information is received;
determining a light wave transmission delay according to the first moment, the second moment, the third moment and the fourth moment; and
calculating the current distance information according to a preset light wave transmission speed and the light wave transmission delay.

4. The method according to claim 2, wherein the autonomous mobile device comprises an antenna array;
after calculating the current distance information between the autonomous mobile device and the target object based on the first ranging information, the method further comprises:
determining distance information between each antenna and the target object according to the first ranging trigger information received by each antenna in the antenna array;
calculating angle information between the autonomous mobile device and the target object based on a phase difference between antennas and each distance information; and
determining a direction of the target object relative to the autonomous mobile device according to the angle information and each distance information.

5. The method according to claim 2, wherein adjusting the moving trajectory of the autonomous mobile device based on the current position information of the target object comprises:
determining a preset moving trajectory of the autonomous mobile device;
determining whether the current position information of the target object overlaps with the preset moving trajectory in a case where the current distance information is less than or equal to a distance threshold;
in a case where the current position information of the target object does not overlap with the preset moving trajectory, calculating a first speed value based on a speed decrement value and a preset speed value, and controlling the autonomous mobile device to move based on the first speed value, wherein the first speed value is greater than 0;
in a case where the current position information of the target object overlaps with the preset moving trajectory, determining a moving trajectory direction of the autonomous mobile device, and determining whether the current position information is consistent with the moving trajectory direction;
in a case where the current position information is consistent with the moving trajectory direction, adjusting a moving speed of the autonomous mobile device to 0;
in a case where the current position information is not consistent with the moving trajectory direction, calculating a second speed value based on a speed increment value and the preset speed value, and controlling the autonomous mobile device to move based on the second speed value.

6. The method according to claim 5, wherein the speed decrement value and the speed increment value are set based on the current distance information.

7. The method according to claim 5, further comprising:
controlling the autonomous mobile device to move based on the preset speed value, in a case where the current distance information is greater than the distance threshold.

8. The method according to claim 1, wherein the first UWB module of the autonomous mobile device is in a monitor mode, and the first UWB module is configured to send the first ranging request based on the received first ranging trigger information in the monitor mode.

9. The method according to claim 1, further comprising:
switching the first UWB module from a monitor mode to an announcer mode in a case of a failure of the autonomous mobile device, wherein the first UWB module is configured to broadcast fault ranging trigger information in the announcer mode.

10. The method according to any one of claims 1 to 8, further comprising:
receiving second ranging trigger information of a target detection UWB module by the Bluetooth unit of the first UWB module; wherein a plurality of detection UWB modules are arranged respectively at a plurality of fixed positions in a warehousing system, and the plurality of detection UWB modules comprise the target detection UWB module;
sending a second ranging request to the target detection UWB module by the UWB chip of the first UWB module based on the second ranging trigger information;
acquiring second ranging information returned by the target detection UWB module based on the second ranging request, and determining a distance between the autonomous mobile device and the target detection UWB module based on the second ranging information;
in a case where the distance between the autonomous mobile device and the target detection UWB module is within a first distance threshold range, determining that the first UWB module set on the autonomous mobile device is normal;
in a case where the distance between the autonomous mobile device and the target detection UWB module is outside the first distance threshold range, determining that the first UWB module set on the autonomous mobile device is abnormal and/or the target detection UWB module is abnormal, and controlling the autonomous mobile device to stop moving.

11. The method according to claim 10, further comprising:
in a case where the first UWB module does not receive the second ranging trigger information sent by the target detection UWB module, determining that the first UWB module set on the autonomous mobile device is abnormal and/or the target detection UWB module is abnormal, and controlling the autonomous mobile device to stop moving.

12. The method according to claim 10, wherein the plurality of detection UWB modules are evenly arranged on a top of the warehousing system, and/or the plurality of detection UWB modules are evenly arranged at a plurality of charging stations of the warehousing system.

13. The method according to claim 10, wherein the target detection UWB module is in an announcer mode, and the first UWB module is in a monitor mode.

14. The method according to any one of claims 1 to 8, wherein the autonomous mobile device is provided with at least one third UWB module, and the method further comprises:
broadcasting third ranging trigger information by a Bluetooth unit of the third UWB module;
receiving the third ranging trigger information by the Bluetooth unit of the first UWB module;
sending a third ranging request to the third UWB module by the UWB chip of the first UWB module based on the third ranging trigger information;
determining, by the third UWB module, third ranging information based on the third ranging request, and sending the third ranging information to the first UWB module, in a case where the third UWB module receives the third ranging request;
determining, by the first UWB module, a distance between the first UWB module and the third UWB module in the autonomous mobile device based on the third ranging information;
in a case where the distance between the first UWB module and the third UWB module in the autonomous mobile device is within a second distance threshold range, determining that the first UWB module set on the autonomous mobile device is normal;
in a case where the distance between the first UWB module and the third UWB module in the autonomous mobile device is outside the second distance threshold range, determining that the first UWB module and/or the third UWB module set on the autonomous mobile device is abnormal, and controlling the autonomous mobile device to stop moving.

15. The method according to claim 14, further comprising:
in a case where the first UWB module does not receive the third ranging trigger information sent by the third UWB module, determining that the first UWB module and/or the third UWB module set on the autonomous mobile device is abnormal, and controlling the autonomous mobile device to stop moving.

16. The method according to claim 14, wherein the third UWB module of the autonomous mobile device is in an announcer mode, and the first UWB module of the autonomous mobile device is in a monitor mode.

17. A method for trajectory adjustment of an autonomous mobile device, applicable to a target object, wherein the target object is provided with at least one second UWB module, and the second UWB module comprises a Bluetooth unit and a UWB chip, and the method comprises:
broadcasting first ranging trigger information by the Bluetooth unit of the second UWB module;
determining first ranging information based on a first ranging request in a case of receiving the first ranging request returned by an autonomous mobile device based on the first ranging trigger information, wherein the autonomous mobile device is provided with at least one first UWB module; and
sending the first ranging information to the autonomous mobile device to make the autonomous mobile device adjust a moving trajectory of the autonomous mobile device based on the first ranging information.

18. The method according to claim 17, wherein the second UWB module of the target object is in an announcer mode, and the second UWB module is configured to broadcast the first ranging trigger information in the announcer mode.

19. The method according to claim 17 or 18, wherein the target object is provided with at least one fourth UWB module, and the method further comprises:
receiving, by a Bluetooth unit of the fourth UWB module, fourth ranging trigger information sent by a target detection UWB module; wherein a plurality of detection UWB modules are arranged respectively at a plurality of fixed positions in a warehousing system, and the plurality of detection UWB modules comprise the target detection UWB module;
sending, by a UWB chip of the fourth UWB module, a fourth ranging request to the target detection UWB module based on the fourth ranging trigger information;
acquiring fourth ranging information returned by the target detection UWB module based on the fourth ranging request, and determining a distance between the target object and the target detection UWB module based on the fourth ranging information;
in a case where the distance between the target object and the target detection UWB module is within a third distance threshold range, determining that the fourth UWB module set on the target object is normal;
in a case where the distance between the target object and the target detection UWB module is outside the third distance threshold range, determining that the fourth UWB module set on the target object is abnormal and/or the target detection UWB module is abnormal, and outputting alarm information.

20. The method according to claim 19, further comprising:
in a case where the fourth UWB module does not receive the fourth ranging trigger information sent by the target detection UWB module, determining that the fourth UWB module set on the target object is abnormal and/or the target detection UWB module is abnormal, and outputting alarm information.

21. The method according to claim 19, wherein the plurality of detection UWB modules are evenly arranged on a top of the warehousing system, and/or the plurality of detection UWB modules are evenly arranged at a plurality of charging stations of the warehousing system.

22. The method according to claim 19, wherein the target detection UWB module is in an announcer mode, and the fourth UWB module is in a monitor mode.

23. The method according to claim 17 or 18, wherein the target object is provided with at least one fourth UWB module, and the method further comprises:
broadcasting fifth ranging trigger information by the Bluetooth unit of the second UWB module;
receiving the fifth ranging trigger information by a Bluetooth unit of the fourth UWB module;
sending, by a UWB chip of the fourth UWB module, a fifth ranging request to the second UWB module based on the fifth ranging trigger information;
determining, by the second UWB module, fifth ranging information based on the fifth ranging request and sending the fifth ranging information to the fourth UWB module, in a case where the second UWB module receives the fifth ranging request;
determining, by the fourth UWB module, a distance between the fourth UWB module and the second UWB module in the target device based on the fifth ranging information;
in a case where the distance between the fourth UWB module and the second UWB module in the target object is within a fourth distance threshold range, determining that the fourth UWB module set on the target object is normal;
in a case where the distance between the fourth UWB module and the second UWB module in the target object is outside the fourth distance threshold range, determining that the fourth UWB module and/or the second UWB module set on the target object is abnormal, and outputting alarm information.

24. The method according to claim 23, further comprising:
in a case where the fourth UWB module does not receive the fifth ranging trigger information sent by the second UWB module, determining that the fourth UWB module and/or the second UWB module set on the target object is abnormal, and outputting alarm information.

25. The method according to claim 23, wherein the second UWB module is in an announcer mode, and the fourth UWB module is in a monitor mode.

26. A method for trajectory adjustment of an autonomous mobile device, applicable to a UWB base station, wherein the UWB base station is provided with at least one fifth UWB module, and the at least one fifth UWB module comprises a Bluetooth unit and a UWB chip, and the method comprises:
receiving a device ranging request sent by an autonomous mobile device and an object ranging request sent by a target object;
determining device position information of the autonomous mobile device based on the device ranging request and determining object position information of the target object based on the object ranging request; and
calculating a distance between the autonomous mobile device and the target object according to the device position information and the object position information, and generating adjustment information for adjusting a moving trajectory of the autonomous mobile device based on the distance.

27. A system for trajectory adjustment of an autonomous mobile device, comprising the autonomous mobile device and a target object,
wherein the autonomous mobile device is provided with at least one first UWB module, and the target object is provided with at least one second UWB module, the at least one first UWB module is in a monitor mode and is configured to send a first ranging request based on received first ranging trigger information in the monitor mode, and the at least one second UWB module is in an announcer mode and is configured to broadcast the first ranging trigger information in the announcer mode, and the at least one first UWB module and the at least one second UWB module each comprise a Bluetooth unit and a UWB chip;
wherein the target object is configured to output the first ranging trigger information by the Bluetooth unit of the second UWB module, and the autonomous mobile device is configured to receive, by the Bluetooth unit of the first UWB module, the first ranging trigger information sent by the target object, and send, by the UWB chip of the first UWB module, the first ranging request to the target object based on the first ranging trigger information;
wherein the target object is further configured to send first ranging information to the autonomous mobile device based on the first ranging request; and the autonomous mobile device is further configured to determine current position information of the target object according to the first ranging information, and adjust a moving trajectory of the autonomous mobile device based on the current position information.

28. The system according to claim 27, wherein the autonomous mobile device is further configured to:
adjust the monitor mode of the first UWB module to an announcer mode in a case where device failure information is detected; and
output fault ranging trigger information of the autonomous mobile device by the Bluetooth unit.

29. The system according to claim 28, further comprising a target autonomous mobile device configured to:
receive the fault ranging trigger information sent by the autonomous mobile device;
send a fault ranging request to the autonomous mobile device based on the fault ranging trigger information;
determine fault position information of the autonomous mobile device according to current ranging information returned by the autonomous mobile device based on the fault ranging request; and
report the fault position information and obtain obstacle avoidance trajectory information.

30. A computing device, comprising:
a memory,
a processor, and
computer instructions stored in the memory and executable by the processor, wherein the processor is configured to implements the steps of the method according to any one of claims 1 to 26 when executing the computer instructions.

31. A computer-readable storage medium having stored therein computer instructions that, when executed by a processor, cause the steps of the method according to any one of claims 1 to 26 to be implemented.
